# EUROPEAN PATENT SPECIFICATION

(11) **EP 0 973 028 B1**
(45) Date of publication and mention of the grant of the patent: **22.09.2004**
(21) Application number: 99305558.1
(22) Date of filing: 13.07.1999
(51) Int. Cl.: G01N 27/403

(54) **Electrode array**
Elektrodenanordnung
Ensemble d'électrodes

(30) Priority: 14.07.1998 GB 9815305; 13.04.1999 GB 9908294
(43) Date of publication of application: 19.01.2000
(73) Proprietor: Oxley Developments Company Limited, Ulverston Cumbria LA12 9QG (GB)
(72) Inventor: Bell, Andrew John, Grange-over-Sands, Cumbria LA11 6BX (GB); Palmer, Simon Richard Saunch, Kendal, Cumbria LA9 4JG (GB)
(74) Representative: W.P. Thompson & Co.

(56) References cited:
- WO-A-94/15207
- GB-A- 2 290 617
- GOUVERNEUR S ET AL: "NEW DENSIFICATION PROCESS OF THICK FILMS" IEEE TRANSACTIONS ON COMPONENTS,HYBRIDS,AND MANUFACTURING TECHNOLOGY,US,IEEE INC. NEW YORK, vol. 16, no. 5, 1 August 1993 (1993-08-01), pages 505-509, XP000412729 ISSN: 0148-6411

## Description

The present invention relates to electrochemical sensors and also to a means of presenting such sensors to an aqueous environment whilst protecting the interconnection circuitry from contact with the water.

A common concept in the sensing of chemical species in solution is that of their reduction or oxidation at a working electrode which is held at a predetermined potential with respect to a reference electrode. The current passing through the working electrode is an indication of the rate of oxidation or reduction, which in turn is a measure of the concentration of the species in solution.

In aqueous systems, such a process could be used to measure the concentration of dissolved species such as C1, HOC1, O₂ and O₃, for example. However there are two issues which complicate the measurement.

The first problem is that the response of the electrodes is dependent on their size. The oxidation/reduction processes at a planar working electrode occur in an approximately hemispherical zone in the solution around the electrode, with a radius similar to that of the electrode. The response time of the electrode is therefore governed by the diffusion of the species in question through this zone. Hence, a large electrode has a long response time, whereas small electrodes respond much more quickly. In practice, this also means that in flowing systems, for larger electrodes the current output can fluctuate due to disturbances to the process zone. It has been shown that for electrode systems to have sufficiently rapid response and to be insensitive to flow or stirring, the characteristic dimension of the electrode should be less than 25 µm. Such electrodes are often referred to as microelectrodes.

The second issue is that in attempting to measure certain species, such as the measurement of chlorine levels in drinking water or swimming pools, the resulting measurement is dependent upon the pH of the solution. In order to remove any uncertainty in such measurements, it is desirable to be able to control the pH at which the measurement is carried out. This can in practice be done by the electrochemical generation of H⁺ or OH⁻ ions in the vicinity of the working electrode, thus rendering the solution close to the electrode acidic or alkaline, respectively.

Both of these issues were addressed in UK Patent Application GB 2290617 A (Siemens Plessey Controls Ltd), which describes an arrangement of electrodes for the measurement of aqueous chlorine, including a pair of interdigitated electrodes 4, one of which could be a microelectrode having a finger width of less than 25 µm and the other being a hydrogen or hydroxyl ion generator. The principle of the hydrogen/hydroxyl ion generator was also addressed in WO 94/15207, assigned to Unilever plc, which described the use of electrochemically generated species to influence the electrochemical measurement of a second species within an enclosed volume.

To work effectively, the system as described in GB 2290617 A must contain lines of width less than or equal to 25 µm, necessitating the use of photolithography, sputtering or laser ablation for their fabrication. These techniques are all expensive in comparison to, say, screen printing, which is able to define planar electrode shapes at low cost but not at the resolution required for true microelectrodes. Beside high cost, a second disadvantage of the microline array described in GB 2290617 A is that to obtain sufficiently large levels of current that do not require complex noise reduction techniques, the area of the array needs to be very large compared to the size of the other components in the system.

In accordance with a first aspect of the present invention, there is an electrode array for an electrochemical sensor formed on an insulating substrate and comprising a stack of conductive layers interleaved with and so separated from each other by dielectric layers, at least some of the peripheral surfaces of the conductive layers being exposed and so adapted to serve as strip electrodes.

This provides an economical and straightforward way to form the necessary electrode array.

The conductive and/or the dielectric layers may be formed by thick film printing. Screen printing is a suitable process. Alternatively the layers may be formed by stacking of green tape.

The thickness of the conductive layers is preferably not more than 25µm.

The dielectric layers are preferably between 10 and 50 µm thick.

Preferably the layer furthest from the substrate is a dielectric layer, so that the main face of the stack is electrically insulated. It is also preferred that selected peripheral edges of the stack are insulated and grooves or other cutaways are formed into the electrode array thereby exposing peripheral surfaces of the conductive layers to serve as the strip electrodes.

Preferably contact pads are provided being formed by exposed face portions of selected conductive layers.

Connections between conductive layers may be formed through respective dielectric layers.

The electrode array may be incorporated in a device for detecting chemical species in solution.

In accordance with a second aspect of the present invention, there is a method of manufacturing an electrode array for an electrochemical sensor comprising forming on an insulating substrate a stack of conductive layers interleaved with and so separated from each other by dielectric layers and forming in the stack grooves or other cutaways thereby exposing peripheral surfaces of the conductive layers to serve as strip electrodes.

A problem with electrochemical sensors generally, not just those described herein, is how to support the sensor electrodes and to present them to the aqueous environment whilst reliably isolating the internal circuitry of the sensor.

In a preferred embodiment, the electrode array embodying the invention is incorporated in a device for detecting chemical species, the substrate being connected in a fluid tight manner to a receptacle housing associated electronics, the electrode array being connected to one or more contact pad(s) formed on the substrate and the or each contact pad(s) being engaged by a respective spring probe connected to the electronics.

Preferably, the fluid-tight connection is achieved by clamping the substrate to the receptacle with a resilient sealing means disposed therebetween.

Advantageously, the substrate has a central hole which is mounted over a threaded stub extending from the receptacle, the substrate being held in place by a threaded nut on the stub.

Preferably, the substrate is supported by a shield member there being respective O-ring seals between the nut and the shield, the shield and the substrate, and the substrate and the receptacle.

The invention is described further hereinafter, by way of example only, with reference to the accompanying drawings, wherein:
Figs. 1 (a) and 1 (b) show respectively a conductor layer and an insulator layer of an electrode array which does not itself embody the invention;
Figs. 1 (c) and 1 (d) show the insulator layer and conductor layer of the same electrode array superimposed one on the other;
Fig. 2 shows the conductor pattern of Fig. 1a in more detail and to a larger scale;
Fig. 3 is a simplified circuit diagram of a potentiostat measurement circuit for interface to a sensor constructed in accordance with the invention;
Fig. 4 illustrates a typical output characteristic from the measurement circuit of Fig. 3;
Fig. 5 is a typical voltage response characteristic for chlorine detection using the sensor and circuit of Figs. 1 to 4; .
Fig. 6 is a diagrammatic sectional side view of one embodiment of a sensor mounting apparatus in accordance with the present invention;
Fig. 7 is a front view of a circular substrate carrying three sensor arrays forming part of the apparatus of Fig. 6;
Fig. 8 is a perspective view of a stage in production of a microelectrode structure according to the present invention; and
Fig. 9 is a corresponding view of a later stage in production of the same structure.

The approach in this case is to manufacture electrodes which, in order to be cost effective, depart slightly from the dimensional constraints of a microelectrode, and then to apply appropriate signal processing to correct for those departures.

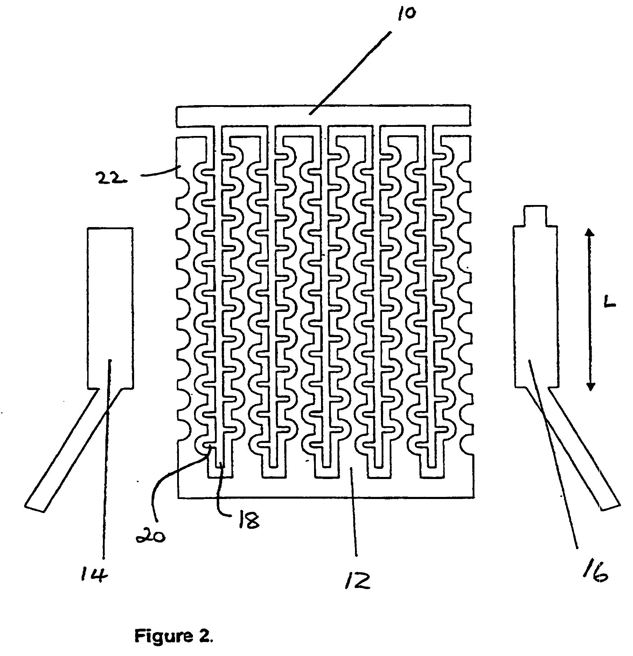

Referring first to Fig. 2, there is shown an example of a conductor pattern comprising a working electrode 10, a proton/hydroxyl ion generator 12 and two counter electrodes 14, 16. By way of example only, the length L of the counter electrodes 14,16 in the example is 3750µm.

The working electrode 10 comprises a number (five shown) of elongate, parallel strips 18, on each side of which there are a plurality of round ended, lateral projections 20 which are mutually staggered along the two sides of the associated strip 18. The proton/hydroxyl ion generator electrode 12 comprises a number of elongate parallel strips 22 which are interdigitated with the strips 18 of the working electrode 10 and which contain a plurality of semi-circular recesses which partially receive respective ones of the lateral projections 20 of the strips 18.

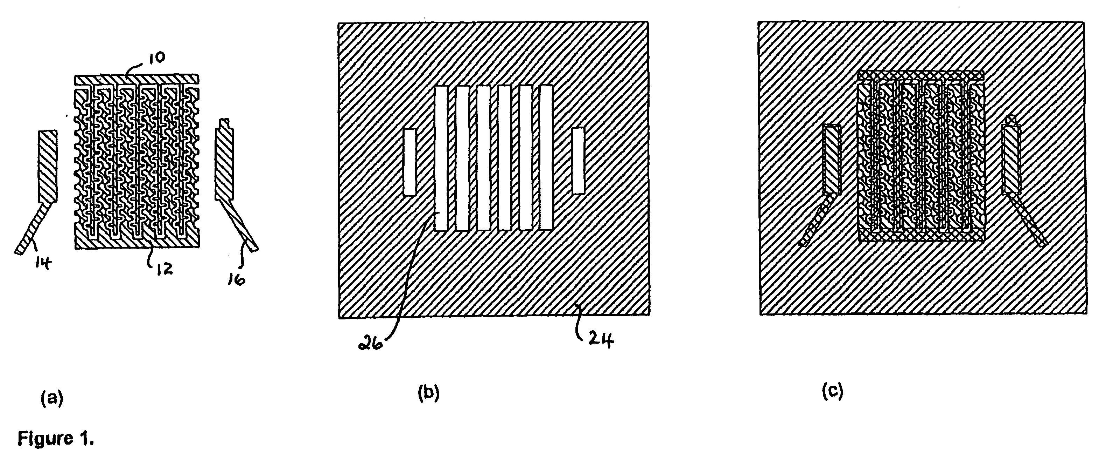

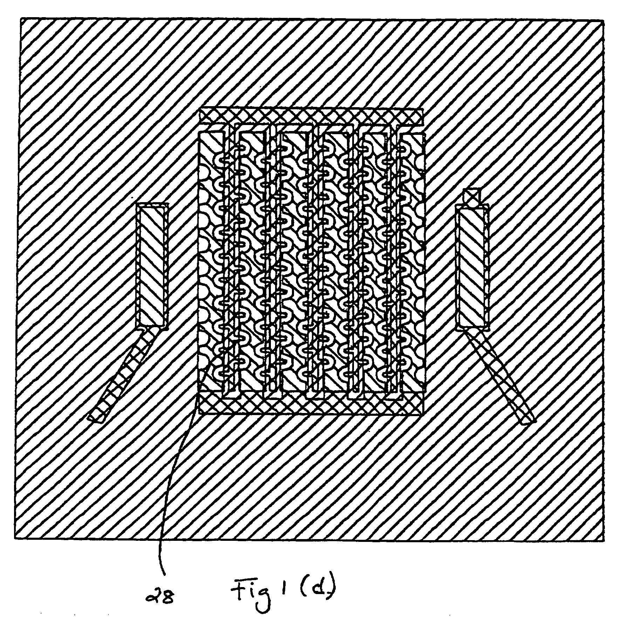

As shown in Fig. 1a, the electrode array layer of Fig. 2 is fabricated by printing, eg screen printing, a conducting layer on a nonconductive substrate (not shown). As shown in Fig. 1b an insulating layer 24 is formed having a plurality of parallel rectangular windows 26. The design of the two layers is such that when the insulating layer is effectively superpositioned over the electrode array, the structure of Fig. 1c (shown to a larger scale in Fig. 1d) is obtained wherein the strips 18 and inner portions of the lateral projections 20 are covered so as to leave exposed just the "tips" 28 of these lateral projections 20, disposed in the respective semi-circular recesses of the strips 22. These exposed tips 28 (see Fig. 1d) effectively form pseudo-microdots which, although larger than true micro-electrodes, are smaller than could be printed directly by conventional screen-printing of a single electrode layer. These microdots are connected together in parallel. However, the insulator layer isolates the interconnection tracks from the solution. pH control may also be applied by incorporating a proton/hydroxyl ion generator in the array. One or more counter electrodes must also be present to complete the current path through the solution. One example of such a design is shown in Figures 1 and 2 by the counter electrodes 14,16.

The conducting electrode 10,12 could be gold, platinum, palladium, silver or any other suitable conductor, deposited by screen printing or thin film techniques. The insulator layer could be either a ceramic or polymer dielectric layer.

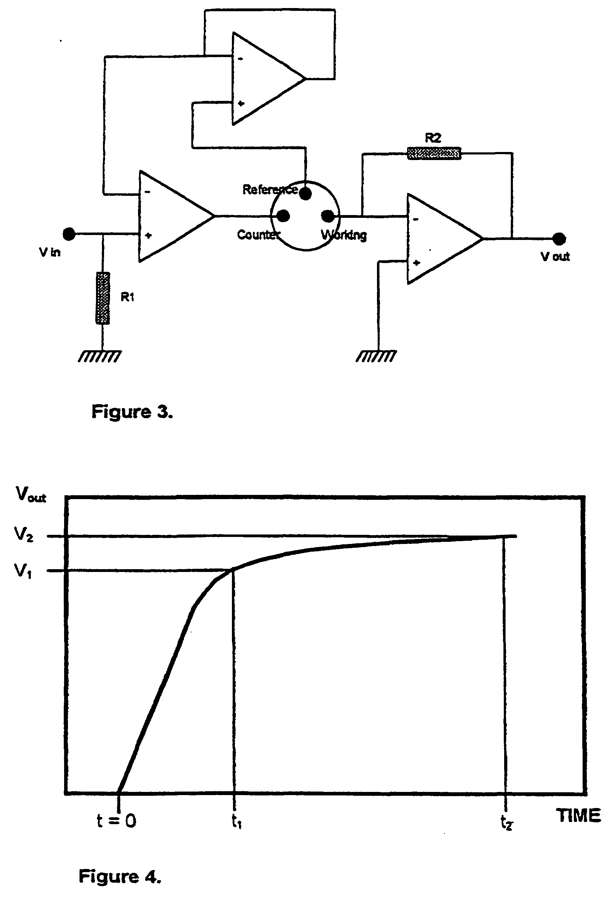

A schematic of an example of a measurement circuit by which the sensor can be read is shown in Figure 3, in which the three amplifiers shown are of high input impedance. The reference electrode can be a conventional electrochemical reference electrode. The output from this circuit typically follows the curve shown in Figure 4. Following the setting up of the appropriate reference potential (Vᵢₙ) at time, t= 0, the current through the working electrode rises to a value given by V₁ and then approaches asymptotically a value that is equivalent to that of a true microelectrode. The slope of the curve, both between t = 0 and t₁ and between t₁ and t₂ is determined by the size of the pseudo-microdots. The larger the dots then the longer is time t₁ and the greater is the difference between V₁ and the theoretical microelectrode value. By employing circuitry which applies the reference potential as a square wave of frequency, f< 1/t₁ and taking the value of the output V₁ every cycle, reproducible measurements, representative of the analyte concentration can be made. A calibration curve can be established between the value V₁ and a range of solution concentrations for the species in question.

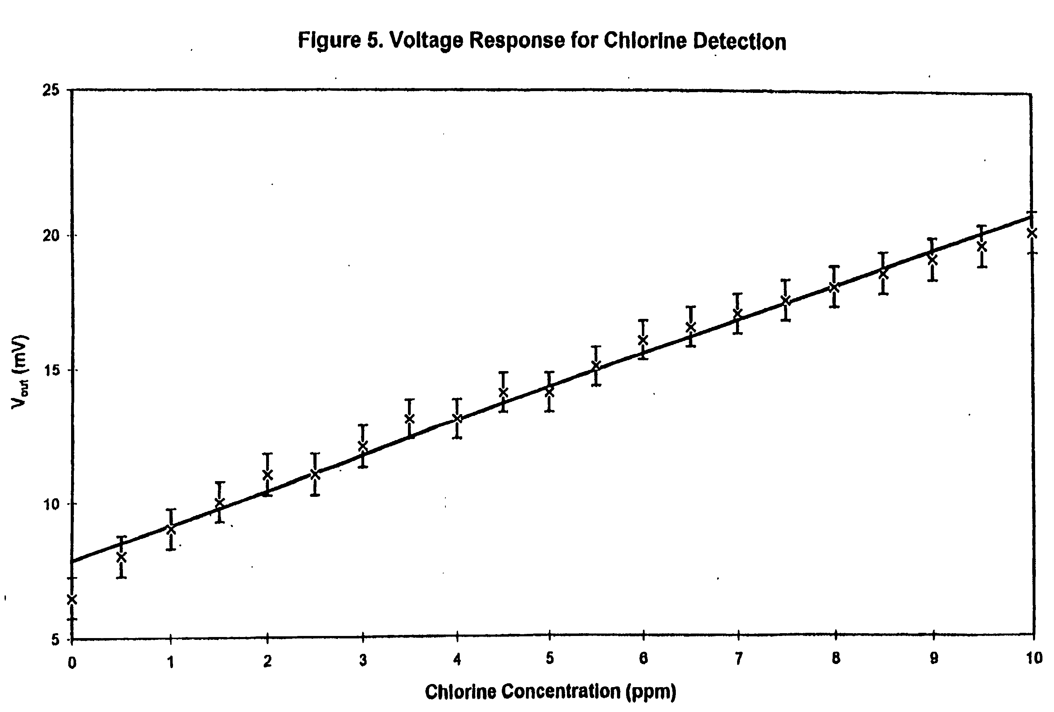

A typical result showing V₁ as a function of chlorine concentration is shown in Figure 5.

In an alternative arrangement, true microdot electrodes, ie approximately circular electrodes of which the mean diameter is less than or equal to approximately 25 µm are produced by forming an electrode, consisting of a layer of a metallic conductor (eg gold, platinum, palladium), over which is deposited a layer of a porous dielectric (eg ceramic or polymer). The porosity of the insulator/dielectric layer is such as to reveal areas of the underlying conductor having a mean diameter of approximately 25 µm or less. Thus the microdots are all interconnected to a common terminal.

To allow pH control to take place, the underlying conductor pattern may be in the form of a pair of interdigitated electrodes, one of the pair being the working electrode, whilst the second is a hydrogen or hydroxyl ion generator. In this case the dimensions of the lines can be macro- rather than microscopic; there is no requirement for fine line definition as in GB 2290617. Alternatively, the underlying electrode pattern could be similar to that described above in the first example. The porous dielectric layer may be configured to cover both of the electrodes in the interdigitated pair (i.e. a macroscopically continuous porous layer) or it may be patterned to cover only the working electrode.

The porous layer should preferably be less than 25 µm in thickness so that the solution is in contact with the selected areas of the underlying conductor. Such a layer may be produced by the screen printing of a ceramic dielectric or polymer dielectric which has been suitably diluted by an appropriate solvent so that the required porosity is introduced into the layer. An alternative and preferred method is to employ a ceramic dielectric ink, to which is added an appropriate quantity of spherical particles having a mean diameter of 25 µm or less i.e. "microspheres". On firing the mixture after printing of the layer, the spherical particles are volatilised, leaving pores of the required size. By adjusting the concentration of the microspheres added to the ink, the number of pores per unit area of fired insulator layer can be controlled. The microspheres should be of a suitable polymer material which volatilises below the firing temperature for the ceramic dielectric (usually 850°C) and must resist being dissolved by the solvents in the ink. Provided the mixture is formed immediately prior to printing and drying, suitable materials for the microspheres include polymethyl methacrylate and polystyrene.

The sensing circuitry and a method of operation can be substantially as described in connection with the first example.

The present invention provides a cost effective method of manufacture of a microelectrode array without recourse to photolithography, sputtering or laser ablation as follows.

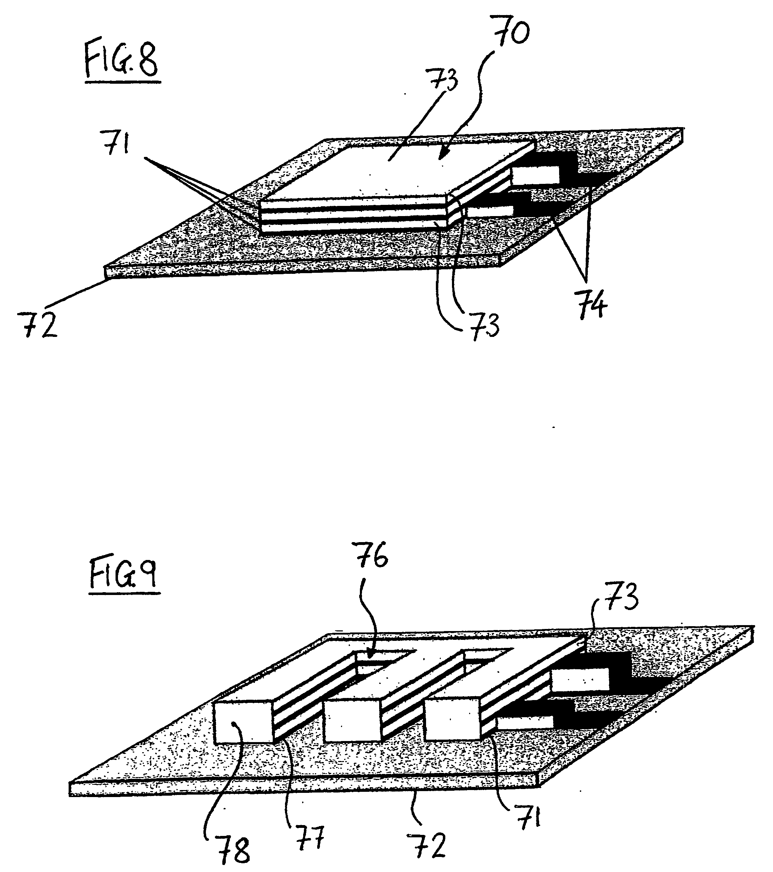

A multilayer structure shown at 70 in Fig. 8 is formed on a polymer, ceramic or ceramic-coated metal substrate 72 by conventional thick-film processes so as to give structure with alternating layers of metal 71 and insulator 73, an insulating layer being at the top of the stack to insulate the upper face. The layers can be formed by thick film printing, typically using a ceramic or polymeric dielectric to form the insulating layers. The layers may alternatively be formed in known manner by stacking of green tape. The thickness of each metallic layer is preferably less than 25µm, whilst the thickness of the insulators can be in the region 10 to 50µm. The metallic layers are connected to metallic contact pads 74 suitably protected from any contact with liquids. These contact pads are, in the illustrated embodiment, integrally formed with the respective metallic layers.

The structure shown in Fig. 8 is subsequently provided with an insulating layer on its peripheral faces as seen at 78 in Fig. 9. Thin grooves 76 are then scribed into the multilayer structure, for example by a diamond dicing saw, so that peripheral edges of the metallic layers are revealed as strata 77 in the sides of the grooves (Fig. 9). Thus when the structure is immersed in a liquid these edges of the metallic strata, which are preferably no more than 25µm thick, act as microline electrodes.

In one embodiment, all the metallic layers can be connected in parallel to give a large microline array. Connections can be formed between metallic layers through intervening dielectric layers.

A second embodiment allows for the separate connection of alternate metallic layers to provide two sets of strata with different functions, e.g. one set could be used to sense a dissolved gas, whilst the other could be used as either a hydrogen ion or hydroxyl ion generator, for local pH control.

A problem with electrochemical sensors generally, not just those described above, is how to support the sensor electrodes and to present them to the aqueous environments whilst reliably isolating the internal circuitry of the sensor.

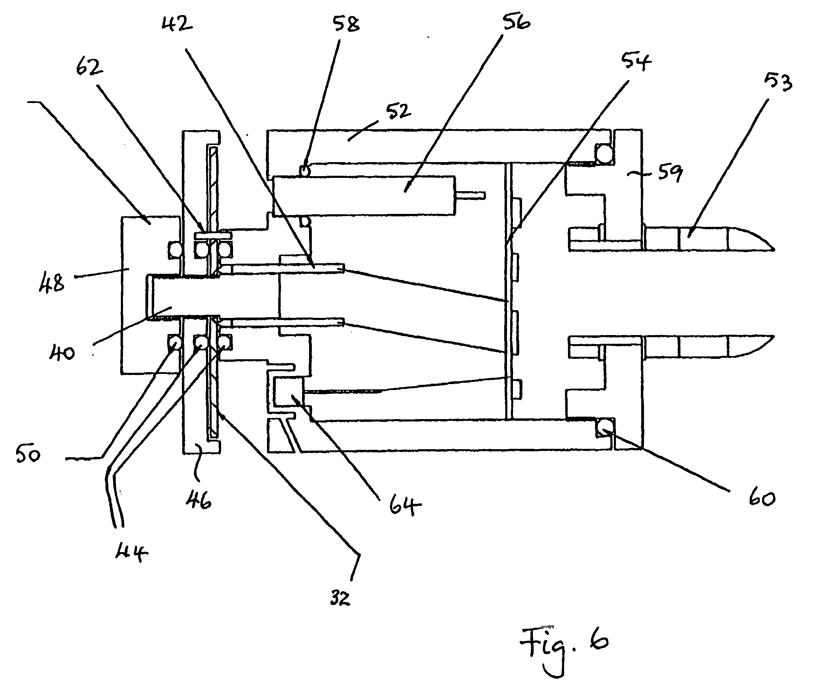

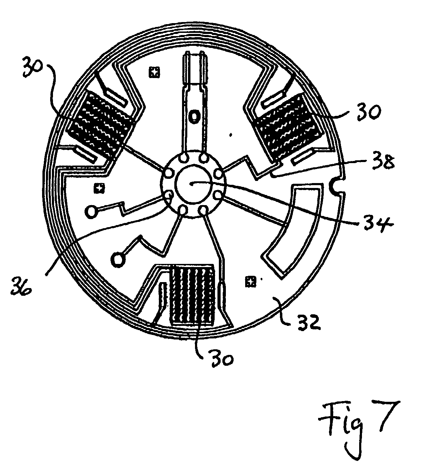

Figs. 6 and 7 show one way in which this can be achieved.

Referring to Fig. 7, three sensors 30 are deposited or otherwise formed on a circular substrate 32 which has a hole 34 at its centre. This forms a "sensor array". The sensors can be formed by any suitable technique, for example as described in any of the techniques described hereinbefore but not necessarily so. Although Fig. 7 shows three sensors 30 in the array, any number of sensors can be selected, as required. Electrical contact pads 36 with conducting tracks 38 to the sensors 30 are arranged around the central hole 34 of the array.

Referring now to Fig. 6, a receptacle for the sensor array, referred to as "the module", comprises a central threaded stub 40 around which are arranged spring probes 42 (eight in this case) to make contact with the contact pads 36 on the array when the array is placed over the stub 40. O-rings 44 of a suitable compliant material are accommodated on both sides of the array to prevent ingress of water to the spring probes 42 and contact pads 36. The array is held in place on the stub 40 by means of a shield 46 and nut 48. A further O-ring 50 between the nut 48 and the shield 46 prevents water ingress to the contact pad area.

The spring probes 42 pass through the body 52 of the receptacle, making contact with a system of printed circuit boards 54 which contain signal conditioning electronics for the array. The power supply and data communications for the electronics pass through the body 52 of the module by means of a water-tight cable gland 53 (cable not shown in Fig. 6).

A reference electrode 56 is also exposed at one end through the receptacle body 52 and is sealed thereto by a further O-ring 58. A rear closure 59 of the receptacle body 52 is closed via a still further O-ring 60. A key 62 locks the sensor array relative to the receptacle body against relative rotation about the stub 40. A temperature sensor 64 is disposed in the receptacle wall adjacent the sensor region.

## Claims

1. An electrode array (70) for an electrochemical sensor formed on an insulating substrate (72) and comprising a stack of conductive layers (71) interleaved with and so separated from each other by dielectric layers (73), at least some of the peripheral surfaces (77) of the conductive layers being exposed and so adapted to serve as strip electrodes.

2. An electrode array as claimed in claim 1 wherein the conductive layers (71) are 25µm or less in thickness.

3. An electrode array as claimed claim 1 or claim 2 wherein the dielectric layers (73) are between 10µm and 50 µm thick.

4. An electrode array as claimed in any preceding claim wherein peripheral faces of the stack are insulated and grooves (76) or other cutaways are formed into the electrode array thereby exposing peripheral surfaces (77) of the conductive layers (71) to serve as the strip electrodes.

5. An electrode array as claimed in any preceding claim wherein electrical connections between conductive layers (71) are formed through intervening dielectric layers (73).

6. A device for detecting chemical species in solution comprising an electrode array as claimed in any preceding claim.

7. A device for detecting chemical species in solution as claimed in claim 6 wherein the substrate (72,32) is connected in a fluid tight manner to a receptacle (52) housing associated electronics (54), the electrode array being connected to one or more contact pad(s) (36) formed on the substrate and the or each contact pad(s) being engaged by a respective spring probe (42) connected to the electronics.

8. A method of manufacturing an electrode array (70) for an electrochemical sensor comprising forming on an insulating substrate (72) a stack of conductive layers (71) interleaved with and so separated from each other by dielectric layers (73) and forming in the stack grooves (76) or other cutaways thereby exposing peripheral surfaces (77) of the conductive layers (71) to serve as strip electrodes.

## Patentansprüche

1. Elektrodenanordnung (70) für einen elektrochemischen Sensor, die auf einem isolierenden Substrat (72) gebildet ist, und eine schichtweise Anordnung leitfähiger Schichten (71) umfasst, die mit dielektrischen Schichten (73) verschachtelt angeordnet sind und somit durch die dielektrischen Schichten (73) voneinander getrennt werden, wobei mindestens einige der Umfangsflächen (77) der leitfähigen Schichten freiliegen und somit dafür ausgelegt sind, als Streifenelektroden zu dienen.

2. Elektrodenanordnung nach Anspruch 1, wobei die leitfähigen Schichten (71) eine Dicke von 25 µm oder weniger aufweisen.

3. Elektrodenanordnung nach Anspruch 1 oder 2, wobei die dielektrischen Schichten (73) zwischen 10 µm und 50 µm dick sind.

4. Elektrodenanordnung nach einem der vorhergehenden Ansprüche, wobei Umfangsflächen der schichtweisen Anordnung isoliert sind und Rillen (76) oder andere Ausschnitte in der Elektrodenanordnung gebildet sind, wodurch Umfangsflächen (77) der leitfähigen Schichten (71) freigelegt werden, um als Streifenelektroden zu dienen.

5. Elektrodenanordnung nach einem der vorhergehenden Ansprüche, wobei elektrische Verbindungen zwischen den leitfähigen Schichten (71) durch dazwischenliegende dielektrische Schichten (73) gebildet werden.

6. Vorrichtung zur Erfassung einer chemischen Spezies in Lösung, die eine Elektrodenanordnung nach einem der vorhergehenden Ansprüche umfasst.

7. Vorrichtung zur Erfassung einer chemischen Spezies in Lösung nach Anspruch 6, wobei das Substrat (72, 32) in fluiddichter Weise mit einem Behälter (52) verbunden ist, der eine zugehörige Elektronikschaltung (54) umfasst, wobei die Elektrodenanordnung mit einer oder mehreren Kontaktinseln (36) verbunden ist, die auf dem Substrat gebildet sind und eine entsprechende Federsonde (42), die mit der Elektronikschaltung verbunden ist, in die oder jede Kontaktinsel eingreift.

8. Verfahren zur Herstellung einer Elektrodenanordnung (70) für einen elektrochemischen Sensor, das Folgendes umfasst: Bilden einer schichtweisen Anordnung leitfähiger Schichten (71) auf einem isolierenden Substrat (72), die mit dielektrischen Schichten (73) verschachtelt angeordnet sind und somit durch die dielektrischen Schichten (73) voneinander getrennt sind, und Bilden von Rillen (76) oder anderen Ausschnitten in der schichtweisen Anordnung, wodurch Umfangsflächen (77) der leitfähigen Schichten (71) freigelegt werden, um als Streifenelektroden zu dienen.

## Revendications

1. Ensemble d'électrodes (70) pour un capteur électrochimique formé sur un substrat isolant (72) et comprenant un empilement de couches conductrices (71) intercalées avec des couches diélectriques (73), et ainsi séparées les unes des autres par ces dernières, certaines au moins des surfaces périphériques (77) des couches conductrices étant exposées et ainsi adaptées de manière à servir d'électrodes en bandes.

2. Ensemble d'électrodes, selon la revendication 1, dans lequel les couches conductrices (71) ont une épaisseur de 25 µm ou moins.

3. Ensemble d'électrodes, selon la revendication 1 ou la revendication 2, dans lequel les couches diélectriques (73) ont une épaisseur entre 10 µm et 50 µm.

4. Ensemble d'électrodes, selon l'une quelconque des revendications précédentes, dans lequel les faces périphériques de l'empilement sont isolées et des rainures (76), ou autres découpes, sont formées dans l'ensemble d'électrodes, exposant par conséquent les surfaces périphériques (77) des couches conductrices (71) afin de jouer le rôle d'électrodes en bandes.

5. Ensemble d'électrodes, selon l'une quelconque des revendications précédentes, dans lequel les connexions électriques entre les couches conductrices (71) sont formées à travers les couches diélectriques intermédiaires (73).

6. Dispositif permettant de détecter des espèces chimiques en solution, comprenant un ensemble d'électrodes, selon l'une quelconque des revendications précédentes.

7. Dispositif permettant de détecter des espèces chimiques en solution, selon la revendication 6, dans lequel le substrat (72, 32) est connecté de façon étanche aux fluides à un réceptacle (52) lequel abrite les circuits électroniques associés (54), l'ensemble d'électrodes étant connecté à un ou plusieurs patins de contact (36) formés sur le substrat alors que le patin de contact, ou chaque patin de contact, est engagé par une sonde à ressort respective (42) qui est connectée aux circuits électroniques.

8. Procédé permettant de fabriquer un ensemble d'électrodes (70) destiné à un capteur électrochimique comprenant les étapes suivantes : sur un substrat isolant (72) former un empilement de couches conductrices (71) intercalées avec des couches diélectriques (73), et ainsi séparées les unes des autres par ces dernières, et dans l'empilement former des rainures (76), ou autres découpes, exposant par conséquent les surfaces périphériques (77) des couches conductrices (71) afin de jouer le rôle d'électrodes en bandes.
